# EUROPÄISCHE PATENTSCHRIFT

(11) **EP 1 042 417 B1**
(45) Veröffentlichungstag und Bekanntmachung des Hinweises auf die Patenterteilung: **28.06.2006**
(21) Anmeldenummer: 99947418.2
(22) Anmeldetag: 24.09.1999
(51) Int. Cl.: C09D 175/04, C08G 18/10, C09D 17/00

(54) **PIGMENTPASTE, PASTENHARZ UND BESCHICHTUNGSMITTEL UNTER DEREN VERWENDUNG**
PIGMENT PASTE, PASTE RESIN, COATING AGENTS AND THE USE THEREOF
PATE DE PIGMENTS, RESINE EN PATE ET AGENTS DE REVETEMENT ET LEUR UTILISATION

(30) Priorität: 26.10.1998 DE 19849321
(43) Veröffentlichungstag der Anmeldung: 11.10.2000
(73) Patentinhaber: E.I. DUPONT DE NEMOURS AND COMPANY, Wilmington, Delaware 19898 (US)
(72) Erfinder: GÖBEL, Armin, D-58300 Wetter (DE); VOGT-BIRNBRICH, Bettina, D-42719 Solingen (DE)
(74) Vertreter: Gille Hrabal Struck Neidlein Prop Roos
(86) Internationale Anmeldenummer: PCT/EP1999/007110
(87) Internationale Veröffentlichungsnummer: WO 2000/024836

(56) Entgegenhaltungen:
- EP-A1- 0 849 298
- EP-A2- 0 299 148
- US-A- 4 558 090
- US-A- 4 851 460
- US-A- 5 141 987
- US-A- 5 552 496
- US-A- 5 635 559

## Beschreibung

Die Erfindung betrifft Pigmentpasten sowie Pastenharze zur Einarbeitung in wäßrige Beschichtungsmittel, insbesondere zur Einarbeitung in Wasserbasislacke und Wasserdecklacke sowie die Pigmentpasten enthaltende wäßrige Beschichtungsmittel. Die Pigmentpasten und die sie enthaltenden Beschichtungsmittel können vorteilhaft Anwendung finden in der Fahrzeug- und Industrielackierung zum Beschichten von Kunststoff- und Metallsubstraten.

Bei der Herstellung von stabilen pigmentierten Wasserlacken ist es notwendig, die Pigmente gut zu benetzen und in geeigneten Dispergieraggregaten fein zu vermahlen und stabil zu verteilen, um ein Agglomerieren oder Sedimentieren der Pigmente zu verhindern. Bei Einsatz von lösemittelarmen wasserverdünnbaren Dispersionen oder Emulsionen können dabei die Scherkräfte aufgrund der sehr niedrigen Viskositäten nicht ausreichend wirken. Außerdem ist dabei zu berücksichtigen, daß wasserverdünnbare hochmolekulare Dispersionen oder Emulsionen in Dispergieraggregaten nicht immer scherstabil sind. In diesen Fällen ist es daher notwendig, einen Teil des einzusetzenden Bindemittels durch ein Pastenharz (Anreibeharz) zu ersetzen, in dem die Pigmente angerieben werden. Die so erhaltenen Pigment- oder Mahlpasten werden anschließend mit dem Hauptbindemittel vermischt ("aufgelackt" oder komplettiert).

Die genannten Pastenharze müssen dabei eine Reihe von Anforderungen erfüllen. Beispielsweise sollen die Pastenbindemittel mit dem oder den Hauptbindemitteln gut verträglich sein und in der erforderlichen Zusatzmenge die Eigenschaften des Lackes nicht nachteilig verändern. Sie sollen ein gutes Benetzungsvermögen für die jeweiligen Pigmente aufweisen, über einen längeren Zeitraum lagerstabil sein und keine Farbänderungen im Lack bewirken. Insbesondere für die Herstellung von Reparaturlacken aus standardisierten Mischlacken ist es von großer Bedeutung, bezüglich coloristischer und technologischer Eigenschaften sehr gut reproduzierbare Lackkonzentrate einzusetzen, um gewünschte Farbtöne rationell und ohne unzumutbaren Tönaufwand herzustellen.

Es sind bereits verschiedene als Pastenharz geeignete Bindemittel beschrieben worden, die in Wasserbasis- bzw. Wasserdecklacken unterschiedlicher Bindemittelzusammensetzungen Anwendung finden können. So werden in der EP-A-0 260 447 Polyesterharze, Acrylatharze und/oder Amin-Formaldehyd-Kondensationsharze als Anreibeharze zur Herstellung von Wasserbasislacken eingesetzt. Als Hauptbindemittel enthalten die Wasserbasislacke acrylierte Polyester und Polyurethanharze. Die hier beschriebenen Anreibeharze sind mit den Hauptbindemitteln nicht immer voll verträglich, was bei der Formulierung von Metallic-Lacken zur Beeinträchtigung des Metallic-Effektes führen kann.

In der EP-A-0 299 148 werden Pigmentpasten auf Basis von wasserverdünnbaren Polyurethanpastenharzen beschrieben, wobei die Polyurethanharze hergestellt werden aus Polyesterpolyolen, deren Säurekomponente mindestens 50 Gew.-% langkettige Carbonsäuren mit 18 - 60 C-Atomen im Molekül enthält.

Die EP-A-0 438 090 beschreibt Anreibeharze auf Basis wasserverdünnbarer Polyesterurethane, wobei die Polyesterurethane erhalten werden durch Umsetzung von carboxylgruppenfreien Polyesterpolyolen und niedermolekularen Diolen, wobei zumindest ein Teil der niedermolekularen Diole eine zur Anionenbildung befähigte Säuregruppe enthält, mit Diisocyanaten.

Nachteil der genannten Anreibeharze ist, daß mit ihnen formulierte Pigmentpasten, insbesondere Weißpasten, Lacke mit einer mangelnden Deckfähigkeit ergeben. Auch gibt es mit den bekannten Pastenformulierungen große Probleme, ein Tiefschwarz zu erstellen. Desweiteren sind sowohl die bekannten Pastenharze als auch die damit formulierten Pigmentpasten nicht froststabil und die Chemikalienbeständigkeit der mit diesen Pastenharzen erstellten Wasserlacke bzw. daraus erhaltenen Beschichtungen ist verbesserungsbedürftig. Mitunter werden bei der Herstellung der Pastenharzdispersionen unzureichende Festkörpergehalte erzielt, was unter anderem die Verarbeitbarkeit beeinträchtigen und unwirtschaftlicher machen kann.

Aufgabe der Erfindung war es daher, Pigmentpasten zur Einarbeitung in wäßrige Beschichtungsmittel bereitzustellen, die eine sehr gute Verträglichkeit mit einer großen Anzahl verschiedener Bindemittelsysteme sowie ein sehr gutes Pigmentierungs- und Benetzungsvermögen zeigen und infolgedessen eine energie- und zeitsparende Herstellung von pigmentierten Lacken ermöglichen. Die Pigmentpasten sollen gut verarbeitbar sein, Lacke mit einer sehr guten Deckfähigkeit ergeben und die Erstellung eines Tiefschwarzes ermöglichen. Die Pigmentpasten und ebenso die daraus erstellten wäßrigen Lacke sollen weiterhin lager- und froststabil sein. Es sollen Beschichtungen mit hohem Glanz, gutem Metallic-Effekt sowie sehr guter Härte und Chemikalienbeständigkeit erhalten werden.

Die Aufgabe wird gelöst durch eine Pigmentpaste, enthaltend Pastenharz und Pigmente in einem Pigment-Bindemittel-Gewichtsverhältnis von 0,3 : 1 bis 20 : 1, bevorzugt 0,5 : 1 bis 15 : 1, besonders bevorzugt 0,8 : 1 bis 12 : 1, sowie gegebenenfalls Wasser, organische Lösemittel und/oder lackübliche Additive, welche dadurch gekennzeichnet ist,
daß als Pastenharz ein oder mehrere wasserverdünnbare hydroxyfunktionelle Polyurethanharnstoffharze mit einem Harnstoffgruppengehalt (berechnet als - NHCONH-) von 10 bis 300, bevorzugt von 20 bis 250 mmol in 100 g Festharz, einem Urethangruppengehalt (berechnet als -NHCOO-) von 20 bis 300, bevorzugt von 80 bis 250 mmol in 100 g Festharz, einer OH-Zahl von 20 bis 250, bevorzugt 40 bis 200, besonders bevorzugt von 60 bis 150, einer Säurezahl von 15 bis 80, bevorzugt von 18 bis 65, besonders bevorzugt von 19 bis 45 und einer zahlenmittleren Molmasse Mn von 1000 bis 20000 g/mol, bevorzugt von 1500 bis 15000 g/mol, enthalten sind, welche erhältlich sind durch
I) Herstellung eines NCO-Gruppen enthaltenden Polyurethanprepolymeren durch Umsetzung
   a1) einer oder mehrerer hydroxyfunktioneller Verbindungen mit einer zahlenmittleren Molmasse (Mn) von 360 bis 8000, bevorzugt 500 bis 5000 g/mol ausgewählt aus der in Anspruch 1 definiertes Gruppe, mit
   a2) einem oder mehreren Polyisocyanaten und
   a3) mindestens einer Verbindung mit mindestens einer mit Isocyanat reaktiven Gruppe und mindestens einer ionischen oder zur Ionenbildung befähigten Gruppe,
II) nachfolgende Umsetzung des NCO-Gruppen enthaltenden Polyurethanprepolymeren mit
   a4) einem oder mehreren hydroxyfunktionellen Monoaminen mit einer primären oder sekundären Aminogruppe sowie gegebenenfalls mit einem oder mehreren Polyolen, in solchen Mengenverhältnissen, daß das resultierende Polyurethan gewünschte Hydroxylzahlen sowie Harnstoff- und Urethangruppenanteile aufweist,
III) zumindest teilweise Neutralisation der ionischen Gruppen bzw. der in ionische Gruppen überführbaren Gruppen des erhaltenen Polyurethans vor oder nach der Umsetzung in Stufe II und Überführung des erhaltenen Umsetzungsproduktes in die wäßrige Phase.

Im folgenden sollen die in den erfindungsgemäßen Pigmentpasten enthaltenen wasserverdünnbaren hydroxyfunktionellen Polyurethanharnstoffharze sowie ihre Herstellung beschrieben werden.

Als weiteren Gegenstand betrifft die Erfindung die Herstellung der wasserverdünnbaren Polyurethanharnstoffpastenharze. Dabei wird zunächst in einem ersten Schritt (I) ein NCO-funktionelles Polyurethanprepolymer hergestellt. Das Polyurethanprepolymer wird erhalten durch Umsetzung der Komponenten a1) bis a3).

Bei der Komponente a1) zur Herstellung des NCO-funktionellen Polyurethanprepolymeren handelt es sich um hydroxyfunktionelle lineare oder verzweigte Verbindungen, die bevorzugt eine OH-Funktionalität von 2 bis 3, besonders bevorzugt von 2, eine OH-Zahl von 50 bis 250 und eine zahlenmittlere Molmasse (Mn) von 360 bis 8000 g/mol, bevorzugt von 500 bis 5000 g/mol aufweisen.

Die Erfindung betrifft auch die nach dieser Verfahrensweise erhältlichen Pastenharze.

Als Komponente a1) werden Polyesterpolyole, Polycarbonatpolyole, Polyetherpolyole, Polylactonpolyole und/oder Poly(meth)acrylatpolyole bzw. die entsprechenden Diole eingesetzt. Die Polyole und Diole können jeweils einzeln oder in Kombination miteinander eingesetzt werden.

Bevorzugt werden als Komponente a1) Polyesterpolyole, z.B. Polyesterdiole, eingesetzt. Besonders bevorzugt handelt es sich dabei um lineare Polyesterpolyole, insbesondere um lineare Polyesterdiole.

Die Polyesterpolyole können in üblicher dem Fachmann bekannter Weise beispielsweise durch Polykondensation aus organischen Dicarbonsäuren oder ihren Anhydriden und organischen Polyolen hergestellt werden. Die Dicarbonsäuren und die Polyole können aliphatischer cycloaliphatischer und/oder aromatischer Natur sein.

Bei der Säurekomponente zur Herstellung der Polyesterpolyole handelt es sich um niedermolekulare Dicarbonsäuren oder deren Anhydride mit unter 14 Kohlenstoffatomen im Molekül. Geeignete Dicarbonsäuren sind beispielsweise Phthalsäure, Isophthalsäure, Alkyl-Isophthalsäure, Terephthalsäure, Hexahydrophthalsäure, Adipinsäure, Trimethyladipinsäure, Azelainsäure, Sebacinsäure, Fumarsäure, Maleinsäure, Glutarsäure, Bernsteinsäure, Itaconsäure und 1,4-Cyclohexandicarbonsäure. Anstelle der Säuren können auch die entsprechenden Anhydride, sofern sie existieren, eingesetzt werden. Um Verzweigungen zu erzielen, können auch Anteile an höherfunktionellen Carbonsäuren zugesetzt werden, z.B. trifunktionelle Carbonsäuren wie Trimellithsäure, Apfelsäure und Dimethylolpropionsäure.

Zur Herstellung der Polyesterpolyole einsetzbare Polyole sind bevorzugt Diole, beispielsweise Glykole wie Ethylenglykol, Propandiol-1,2, Butandiol-1,2, -1,3 und -1,4, 2-Ethylenpropandiol-1,3, Hexandiol-1,6, Cyclohexandiol-1,2 und -1,4, hydriertes Bisphenol A und Neopentylglykol.

Die Diole können gegebenenfalls durch geringe Mengen an höherwertigen Alkoholen modifiziert sein.

Beispiele für mitverwendbare höherwertige Alkohole sind Trimethylolpropan, Pentaerythrit, Glycerin und Hexantriol. Anteilmäßig können auch kettenabbrechende einwertige Alkohole, beispielsweise solche mit 1 bis 18 C-Atomen im Molekül wie Propanol, Butanol, Cyclohexanol, n-Hexanol, Benzylalkohol, Isodekanol, gesättigte und ungesättigte Fettalkohole, eingesetzt werden.

Die Umsetzung der Komponenten erfolgt dabei in solchen Mengenverhältnissen, daß die gewünschten OH-Zahlen der Polyesterpolyole erhalten werden.

Bevorzugt sind die Polyesterpolyole im wesentlichen carboxylgruppenfrei. Sie können beispielsweise Säurezahlen von < 3, bevorzugt < 1, aufweisen. Es ist jedoch auch möglich, daß die Polyesterpolyole Carboxylgruppen enthalten, beispielsweise können sie dann Säurezahlen von 5 bis 50 mg KOH/g aufweisen. Die Carboxylgruppen können beispielsweise über di- oder trifunktionelle Carbonsäuren, wie z.B. Trimellithsäure, Apfelsäure, und Dihydroxymonocarbonsäuren, wie z.B. Dimethylolpropionsäure, eingeführt werden.

Die Polyesterpolyole können einzeln oder in Kombination miteinander eingesetzt werden.

Ebenfalls bevorzugt sind als Komponente a1) Polycarbonatpolyole und insbesondere Polycarbonatdiole.

Bei den Polycarbonatpolyolen handelt es sich um Ester der Kohlensäure, die durch Reaktion von Kohlensäurederivaten, z.B. Diphenylcarbonat oder Phosgen, mit Polyolen, bevorzugt Diolen, erhalten werden. Als geeignete Diole kommen z.B. Ethylenglykol, Propandiol-1,2 und -1,3, Butandiol-1,4 und-1,3, Hexandiol-1,6, Neopentylglykol, 2-Methyl-1,3-propandiol und 1,4-Bishydroxymethylcyclohexan in Frage.

Die Polycarbonatpolyole können einzeln oder in Kombination miteinander eingesetzt werden.

Als Komponente a1) ebenfalls gut geeignet sind Polyether- und/oder Polylactonpolyole.

Als Polyetherpolyole kommen beispielsweise Polyetherpolyole der folgenden allgemeinen Formel in Frage:

H[O-(CHR⁴)ₙ]ₘ OH,

in der R⁴ Wasserstoff oder ein niedriger Alkylrest (z.B. C₁ bis C₆), gegebenenfalls mit verschiedenen Substituenten, n = 2 bis 6 und m = 10 bis 50 bedeuten. Die Reste R⁴ können gleich oder verschieden sein. Beispiele für Polyetherpolyole sind Poly(oxytetramethylen)glykole, Poly(oxyethylen)glykole und Poly(oxypropylen)glykole oder gemischte Blockcopolymere, die unterschiedliche Oxytetramethylen-, Oxyethylen- und/oder Oxypropyleneinheiten enthalten.

Die Polyetherpolyole können einzeln oder in Kombination miteinander eingesetzt werden.

Bei den Polylactonpolyolen handelt es sich um Polyole, bevorzugt Diole, die sich von Lactonen, bevorzugt Caprolactonen ableiten. Man erhält diese Produkte beispielsweise durch Umsetzung eines epsilon-Caprolactons mit einem Diol. Die Polylactonpolyole zeichnen sich durch wiederkehrende Polyesteranteile; die sich von dem Lacton ableiten, aus. Diese wiederkehrenden Molekülanteile können beispielsweise der folgenden allgemeinen Formel entsprechen: 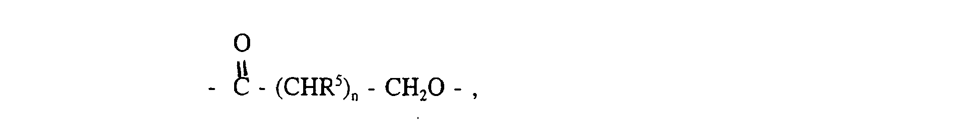 wobei n bevorzugt 4 bis 6 und R⁵ Wasserstoff, ein Alkylrest ein Cycloalkylrest oder ein Alkoxyrest ist und die gesamte Anzahl der Kohlenstoffatome in den Substituenten des Lactonringes 12 nicht übersteigt. Bevorzugt eingesetzte Lactone sind die epsilon-Caprolactone, bei denen n den Wert 4 hat. Besonders bevorzugt ist dabei das unsubstituierte epsilon-Caprolacton. Die Lactone können einzeln oder in Kombination eingesetzt werden.

Für die Umsetzung mit den Lactonen geeignete Diole sind z.B. Ethylenglykol, Propandiol-1,3, Butandiol-1,4 und Dimethylolcyclohexan.

Die Polylactonpolyole können einzeln oder in Kombination miteinander eingesetzt werden.

Als Komponente a1) können desweiteren auch Poly(meth)acrylatpolyole eingesetzt werden. Bei den Poly(meth)acrylatpolyolen handelt es sich um mittels radikalischer Polymerisation hergestellte Polymerisate aus hydroxyfunktionellen (Meth)acrylsäureestern und weiteren radikalisch polymerisierbaren ungesättigten Monomeren. Bevorzugt können Poly(meth)acrylatpolyole verwendet werden, die durch das spezielle Herstellungsverfahren einen selektiven Aufbau mit endständigen OH-Gruppen aufweisen. Die Poly(meth)acrylatpolyole können ebenfalls einzeln oder in Kombination miteinander eingesetzt werden.

Zusätzlich können in der Komponente a1) gegebenenfalls auch ein oder mehrere niedrigmolekulare mehrwertige Alkohole, bevorzugt difunktionelle Alkohole, mit einer Molmasse von 62 bis 356 g/mol mitverwendet werden. Beispiele hierfür sind Ethylenglykol, Propandiol-1,2 und -1,3, Butandiol-1,3 und -1,4, Hexandiol-1,6, Octandiol-1,8, Cyclohexandiol-1,2 und -1,4, Dimethylolpropan, Neopentylglykol, Cyclohexandimethanol und hydroxyethyliertes oder hydroxypropyliertes Bisphenol A oder Bisphenol F.

Als Komponente a2) zur Herstellung der NCO-funktionellen Prepolymeren können beliebige organische Polyisocyanate, bevorzugt Diisocyanate, einzeln oder in Kombination eingesetzt werden. Die Polyisocyanate können z.B. aromatischer, aliphatischer und/oder cycloaliphatischer Natur sein. Es kann sich hierbei auch um Ether- oder Estergruppen enthaltende Diisocyanate handeln. Beispiele für geeignete Diisocyanate sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanato-1,3,3-trimethylcyclohexan, Bis-(4-isocyanato-phenyl)-methan, Norbonendiisocyanat, 4,4-Diisocyanato-diphenylether, 1,5-Dibutylpentamethylendiisocyanat, 2,3-Bis-(8-isocyanatooctyl)-4-octyl-5-hexylcyclohexan, 3-Isocyanatomethyl-1-methylcyclohexylisocyanat, und/oder 2,6-Diisocyanatomethylcapronat.

Es können auch nicht vergilbende und/oder sterisch gehinderte Isocyanate mit 4 bis 25, vorzugsweise 6 bis 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen als Substituenten am Grundgerüst enthalten, eingesetzt werden. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6-Tetramethyl-hexamethylendiisocyanat, 1,5-Dibutyl-pentamethylendiisocyanat, 3-Isocyanatomethyl-l-methyl-cyclohexyl-isocyanat, p- und m-Tetramethylxylylendiisocyanat und/oder die entsprechenden hydrierten Homologen.

Bei der Komponente a3) zur Herstellung der NCO-funktionellen Prepolymeren handelt es sich bevorzugt um niedermolekulare Verbindungen, die mindestens eine, bevorzugt mehr als eine, besonders bevorzugt zwei mit Isocyanatgruppen reaktive Gruppen und mindestens eine ionische oder zur Ionenbildung befähigte Gruppe aufweisen. Diese Verbindungen können dabei entweder zum Kettenabbruch verwendet werden oder sie werden in die Kette eingebaut. Als zur Anionenbildung befähigte Gruppen kommen z.B. Carboxyl-, Phosphorsäure- und Sulfonsäuregruppen in Betracht. Bevorzugte anionische Gruppen sind Carboxylgruppen. Als zur Kationenbildung befähigte Gruppen kommen beispielsweise primäre, sekundäre und tertiäre Aminogruppen oder Oniumgruppen, wie quartäre Ammonium-, Phosphonium- und/oder tertiäre Sulfoniumgruppen in Betracht. Bevorzugt sind anionische oder zur Anionenbildung befähigte Gruppen.

Geeignete mit Isocyanat reaktionsfähige Gruppen sind insbesondere Hydroxylgruppen sowie primäre und/oder sekundäre Aminogruppen.

Bevorzugte als Komponente a3) in Frage kommende Verbindungen sind solche, die Carboxyl- und Hydroxylgruppen enthalten. Beispiele für solche Verbindungen sind Hydroxyalkancarbonsäuren der folgenden allgemeinen Formel :

(HO)ₓQ(COOH)_{y}

worin
Q einen geraden oder verzweigten Kohlenwasserstoffrest mit 1 bis 12 C-Atomen darstellt und x und y jeweils 1 bis 3 bedeuten. Beispiele hierfür sind Zitronensäure und Weinsäure. Bevorzugt sind Carbonsäuren mit x = 2 und y = 1.

Eine bevorzugte Gruppe von Dihydroxyalkansäuren sind alpha,alpha-Dimethylolalkansäuren.

Bevorzugt sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dihydroxybernsteinsäure oder Dihydroxybenzoesäure.

Weitere als Komponente a3) verwendbare Verbindungen sind aminogruppenhaltige Säuren, beispielsweise alpha,alpha-Diamino-valeriansäure, 3,4-Diaminobenzoesäure, 2,4-Diamino-toluol-sulfonsäure und 4,4-Diamino-di-phenylethersulfonsäure, sowie Dihydroxyverbindungen, die eine tertiäre und/oder quaternäre Aminogruppe enthalten, wie beispielsweise N-Methyldiethanolamin, N-Methyl-Diisopropanol und 2-N, N-Dimethylamino-2-ethyl-1,3-propandiol.

Die Umsetzung der Komponenten a1), a2) und a3) miteinander erfolgt in üblicher dem Fachmann bekannter Weise, beispielsweise bei Temperaturen von 50 bis 120°C, bevorzugt 70 bis 100°C, gegebenenfalls unter Zusatz von Katalysatoren.

Die Komponenten a1), a2) und a3) werden in solchen Mengen eingesetzt, daß ein Umsetzungsprodukt mit freien Isocyanatgruppen entsteht, d.h. es wird mit einem Überschuß an Polyisocyanat gearbeitet. Beispielsweise kann mit einem Äquivalentverhältnis von NCO-Gruppen : OH-Gruppen von 1,1 : 1 bis 2,0 : 1, bevorzugt 1,2 : 1 bis 1,9 : 1 gearbeitet werden.

Das in Stufe I erhaltene NCO-Gruppen enthaltende Polyurethanprepolymer wird anschließend in einer weiteren Stufe II) mit der Komponente a4) umgesetzt und so in ein harnstoffgruppenhaltiges und hydroxyfunktionelles Polyurethan umgewandelt. Bei der Komponente a4) handelt es sich um ein oder mehrere hydroxyfunktionelle Monoamine jeweils mit einer primären oder sekundären Aminogruppe. Die hydroxyfunktionellen Monoamine können dabei gegebenenfalls zusammen mit ein oder mehreren Polyolen eingesetzt werden. Die Umsetzung erfolgt dabei bevorzugt unter vollständigem Verbrauch der Aminogruppen. Die verwendbaren Monoamine können eine oder bevorzugt mehrere Hydroxylgruppen enthalten. Es kann sich beispielsweise um Alkanolamine, Dialkanolamine, Alkylalkanolamine und/oder Arylalkanolamine mit mindestens 2 und nicht mehr als 18 C-Atomen im Alkanol-, Alkyl- und Arylrest handeln. Beispiele für verwendbare Monoamine mit einer Hydroxylgruppe sind Monoethanolamin, N-Methylethanolamin, 3-Amino-1-propanol, 2-Amino-2-methylpropanol, 3-Amino-2,2-dimethylpropanol-1, 2-Amino-2-ethyl-1,3-propandiol, N-Phenylmethanolamin und N-Cyclohexylethanolamin. Beispiele für Monoamine mit zwei und mehr Hydroxylgruppen sind Diethanolamin, Diisopropanolamin und 2-Amino-2-hydroxymethylpropan-1,3-diol.

Die Hydroxyamine und gegebenenfalls vorhandenen Polyole (Komponente a4) werden dabei in einer solchen Menge eingesetzt, daß im erhaltenen Umsetzungsprodukt OH-Zahlen von 20 bis 250, bevorzugt 40 bis 200, besonders bevorzugt 60 bis 150 und Harnstoffgruppengehalte (-NHCONH-) von 10 bis 300, bevorzugt 20 bis 250 mmol in 100 g Festharz, resultieren. Hierbei wird eine vollständige Umsetzung angestrebt bei einem praktisch äquivalenten Molverhältnis zwischen reaktiver Aminogruppe und Isocyanatgruppe. Gegebenenfalls kann mit einem sehr kleinen NCO-Überschuß gearbeitet werden. Das Äquivalentverhältnis von NCO-Gruppen zu Aminogruppen sollte kleiner 1,05 : 1 sein, bevorzugt ist es jedoch 1:1.

Die Umsetzung erfolgt beispielsweise bei Temperaturen von 30 bis 80°C, bevorzugt 30 bis 50°C.

Die neben den Hydroxyaminen gegebenenfalls verwendbaren Polyole können zur Einführung von Hydroxylgruppen in das Polyurethan dienen. Sie sind bevorzugt niedermolekulare Alkohole mit 2 oder mehr Hydroxylgruppen. Beispiele hierfür sind Neopentylglykol, Trimethylolpropan, Pentaerythrit, Dipentaerythrit, Glycerin, Hydroxypivalinsäureneopentylglykolester, 2-Ethyl-2-methyl-propandiol-1,3, Hexandiol-1,6, Cyclohexandimethanol und Ditrimethylolpropan.

Durch Umsetzung des NCO-funktionellen Polyurethanprepolymeren mit den Aminoalkoholen und gegebenenfalls weiteren Polyolen wird ein Polyurethanharnstoffharz mit den bereits genannten Harnstoff und Urethangruppengehalten, Molmassen und OH-Zahlen erhalten. Die Polyurethanharnstoffharze haben Säurezahlen von 15 bis 80, bevorzugt 18 bis 65, besonders bevorzugt 19 bis 45.

Es ist jedoch auch möglich, zusätzlich zu den anionischen Gruppen einen Anteil an kationischen Gruppen in das Polyurethanharnstoffharz einzuführen. Dabei sollten die kationischen Gruppen äquivalentmäßig nur zu einem Anteil, bezogen auf die anionischen Gruppen, vorhanden sein. Bevorzugt handelt es sich bei den kationischen Gruppen um tertiäre und/oder quaternäre Aminogruppen. Beispielsweise können 0,05 bis 25 %, bevorzugt 0,1 bis 10 % an kationischen Gruppen, bezogen auf Äquivalente an anionischen Gruppen, vorhanden sein. Die Einführung zusätzlicher kationischer Gruppen kann beispielsweise durch Umsetzung des NCO-Prepolymeren mit Verbindungen mit mindestens einer Hydroxylgruppe und einer tertiären oder quaternären Aminogruppe erfolgen. Dabei kann beispielsweise so vorgegangen werden, daß die genannten Verbindungen mit tertiären und/oder quaternären Aminogruppen gemeinsam mit den Aminoalkoholen mit dem NCO-Prepolymer umgesetzt werden. Beispiele für Verbindungen mit mindestens einer Hydroxylgruppe und einer tertiären oder quaternären Aminogruppe sind N-Methyldiethanolamin, N-Methyl-DÜsopropanol und 2-N,N-Dimethylamino-2-ethyl-1,3-propandiol.

Um eine ausreichende Wasserverdünnbarkeit zu erzielen werden die ionischen bzw. in ionische Gruppen überführbaren Gruppen des Polyurethanharnstoffharzes zumindest teilweise in einer weiteren Stufe III neutralisiert. Die Neutralisation kann dabei vor oder nach der Umsetzung mit den Hydroxyaminen erfolgen. Bevorzugt enthalten die Polyurethanharze anionische Gruppen. Die anionischen Gruppen werden mit Basen neutralisiert. Bevorzugte Beispiele für basische Neutralisationsmittel sind tertiäre Amine wie Trimethylamin, Triethylamin, Dimethylethylamin, Dimethylbutylamin, N-Methylmorpholin, Dimethylethanolamin und Dimethylisopropanolamin. Isocyanatgruppenfreie Polyurethanharnstoffliarze können auch mit Aminen neutralisiert werden, die isocyanatgruppenreaktive Gruppen enthalten, z.B. mit primären oder sekundären Aminen oder Aminoalkoholen.

Nach der Neutralisation wird das Polyurethanharz in die wäßrige Phase überführt. Neutralisation und Überführung in die wäßrige Phase können jedoch auch gleichzeitig erfolgen.

Das Polyurethanharnstoffharz liegt in der wäßrigen Phase in einem kolloidalen Zustand vor und zeigt ein strukturviskoses Verhalten. Letzteres heißt, daß die Viskosität mit steigendem Geschwindigkeitsgefälle abnimmt. Die Viskosität der Polyurethanharnstoffdispersion liegt gemessen bei einem Geschwindigkeitsgefällt von 231 s⁻¹ und einem Festkörpergehalt von 35 Gew.-% bei 0,5 bis 10 Pas. Der Neutralisationsgrad beträgt bevorzugt 60 bis 120 %, besonders bevorzugt 70 bis 100 %. Die wäßrige Harzdispersion weist einen Festkörpergehalt von bevorzugt 25 bis 50 Gew.-%, besonders bevorzugt von 28 bis 42 Gew.-% auf.

Die Teilchengröße des Polyurethanharnstoffharzes in der wäßrigen Phase liegt bevorzugt im Bereich von 25 bis 200 nm, besonders bevorzugt bei 30 bis 100 nm. Die wäßrige Polyurethanharnstoffdispersion kann bevorzugt beispielsweise folgende Zusammensetzung aufweisen:

| | |
|---|---|
| 20 bis 50 Gew.-Teile | des Polyurethanharnstoffharzes |
| 0,3 bis 18 Gew.-Teile | Neutralisationsmittel, bevorzugt Ammoniak und/oder Amin |
| 4 bis 25 Gew.-Teile | eines oder mehrerer zumindest teilweise mit Wasser mischbarer organischer Lösemittel und |
| 15 bis 75 Gew.-Teile | Wasser. |

Gegebenenfalls kann das wasserverdünnbare Polyurethanharnstoffpastenharz auch in Kombination mit Anteilen weiterer Pastenharze, die ebenfalls OH-funktionell sein können, in den erfindungsgemäßen Pigmentpasten eingesetzt werden. Bei den weiteren Pastenharzen kann es sich beispielsweise um Melaminharze, Polyesterharze, Poly(meth)acrylate und/oder von den vorstehend beschriebenen Polyurethanharzen verschiedene, gegebenenfalls modifizierte, Polyurethanharze handeln.

Eine Ausgestaltungsform der Erfindung besteht darin, die vorstehend definierten wasserverdünnbaren hydroxyfunktionellen Polyurethanpastenharze in Kombination mit Polyetherpolyolen mit einer zahlenmittleren Molmasse (Mn) von 400 bis 5000, bevorzugt 500 bis 3000 g/mol einzusetzen. Beispielsweise kann diese Pastenharzzusammensetzung dann 2,0 bis 25 Gew.-%, bevorzugt 3,0 bis 20 Gew.-%, besonders bevorzugt 4 bis 15 Gew.-%, der Polyetherpolyole, bezogen auf den Festkörpergehalt der eingesetzten Polyurethanharzmenge, enthalten.

Beispiele für geeignete Polyetherpolyole sind Poly(oxytetramethylen)glykole, Poly(oxyethylen)glykole und Poly(oxypropylen)glykole oder gemischte Blockcopolymere, die unterschiedliche Oxytetramethylen-, Oxyethylen- und/oder Oxypropyleneinheiten enthalten. Bevorzugt sind Polyetherpolyole, die ohne Mitverwendung von Ethylenoxid, d.h. insbesondere unter ausschließlicher Verwendung von Propylenoxid oder Tetrahydrofuran erhalten werden. Besonders bevorzugt ist die Verwendung von Polyoxypropylenglykolen mit Molmassen von 500 bis 3000 g/mol. Es können dabei verschiedene Polyetherpolyole miteinander kombiniert werden.

Die Herstellung dieser Pastenharzzusammensetzung aus Polyurethanpastenharz und Polyetherpolyolen kann durch Vermischen der beiden Komponenten erfolgen. Das kann auf verschiedene Weise erfolgen. So ist es möglich, die Polyetherpolyole zum wasserverdünnbaren Polyurethanpastenharz vor, während oder nach der Emulsionsbildung, d.h. vor, während oder nach der Überführung des wasserverdünnbaren Polyurethanpastenharzes in die wäßrige Phase, zuzugeben. Bevorzugt kann so verfahren werden, daß die Polyetherpolyole dem wasserverdünnbaren Polyurethanpastenharz vor der Überführung in die wäßrige Phase zugemischt werden. Erfolgt die Zugabe der Polyetherpolyole vor der Überführung in die wäßrige Phase, kann auch so vorgegangen werden, daß die Polyetherpolyole bereits gemeinsam mit den hydroxyfunktionellen Monoaminen zum NCO-Prepolymer zugegeben werden. Die Reaktionsbedingungen zur Umsetzung des NCO-Prepolymeren mit den hydroxyfunktionellen Monoaminen werden dabei in dem Fachmann geläufiger Weise so gewählt, daß eine Reaktion der NCO-Gruppen nur mit den Aminogruppen erfolgt.

Die erfindungsgemäße Pigmentpaste enthält Pigmente. Bei den Pigmenten kann es sich um farb- und/oder effektgebende Pigmente handeln. Als farbgebende Pigmente sind alle lacküblichen Pigmente organischer oder anorganischer Natur geeignet. Beispiele für anorganische oder organische farbgebende Pigmente sind Titandioxid, mikronisiertes Titandioxid, Eisenoxidpigmente, Ruß, Azopigmente, Phthalocyaninpigmente, Chinacridon- oder Pyrrolopyrrolpigmente. Beispiele für effektgebende Pigmente sind Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente.

Bevorzugt werden mit dem hydroxyfunktionellen Polyurethanharnstoffpastenharz konzentrierte farbige Tönpasten hergestellt.

Die erfindungsgemäße Pigmentpaste kann weiterhin Wasser sowie geringe Mengen an organischen Lösemitteln und lackübliche Additive enthalten.

Bei den in der Pigmentpaste gegebenenfalls vorhandenen organischen Lösemitteln handelt es sich um übliche lacktechnische Lösemittel. Diese können aus der Herstellung des Pastenbindemittels stammen oder werden separat zugegeben. Bevorzugt sind es zumindest teilweise wassermischbare Lösemittel. Beispiele für geeignete Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butoxyethanol, Glykole, z.B. Ethylenglykol, Propylenglykol und deren Oligomere, N-Methylpyrrolidon sowie Ketone, z.B. Methylethylketon, Aceton, Cyclohexanon. Die Lösemittel können anteilsweise aromatische oder aliphatische Kohlenwasserstoffe enthalten, wie z.B. Toluol, Xylol oder lineare oder verzweigte aliphatische C6-C12-Kohlenwasserstoffe. Anteilmäßig liegen die organischen Lösemittel beispielsweise maximal bis zu 10 - 15 Gew.-%, bezogen auf die gesamte Pigmentpaste, vor.

In der erfindungsgemäßen Pigmentpaste können bereits verschiedene Lackadditive eingearbeitet sein. Bei den Additiven handelt es sich um übliche auf dem Lacksektor einsetzbare und dem Fachmann bekannte Additive. Beispiele für Additive, die vorteilhafterweise bereits in der Pigmentpaste enthalten sein können sind Dispergiermittel, Netzmittel, Entschäumer, Katalysatoren und Substanzen zur pH-Wert-Einstellung.

Das Pigment-Bindemittel-Gewichtsverhältnis in der Pigmentpaste beträgt 0,3 : 1 bis 20 : 1, bevorzugt 0, 5 : 1 bis 15 : 1, besonders bevorzugt 0,8 : 1 bis 12 : 1. Es hängt beispielsweise von Art und Teilchengröße der eingesetzten Pigmente ab. Bei Formulierungen mit feinteiligen transparenten Pigmenten und mit Ruß kann beispielsweise mit einem Pigment-Bindemittel-Verhältnis von 0,8 :1 bis 2,0 : 1 und bei Formulierungen mit grobteiligen deckenden Pigmenten, z.B. mit Titandioxid, mit einem Pigment-Bindemittel-Verhältnis von 5 : 1 bis 7 : 1 gearbeitet werden. Bei Formulierungen mit Metalleffektpigmenten, z.B. mit Aluminiumpigmenten, kann beispielsweise ein Pigment-Bindemittel-Verhältnis von 1,5 : 1 bis 2,5 : 1 eingestellt werden.

Die erfindungsgemäßen Pigmentpasten können in üblicher Weise hergestellt werden. So können die einzelnen Bestandteile der Pigmentpaste miteinander vermischt und dann in bekannten Mahlaggregaten, z.B. Rührscheibengeräten, Dreiwalzenstühlen, Kugelmühlen, Sand- oder Perlmühlen, vermahlen werden. Diese Vorgehensweise findet insbesondere Anwendung, wenn farbgebende Pigmente eingesetzt werden. Aggregate, Dispergierzeiten und weitere Dispergierbedingungen hängen dabei im wesentlichen von den eingesetzten Pigmenten ab. Sollen Pigmentpasten mit effektgebenden Pigmenten, z.B. mit Aluminiumpigmenten oder Interferenzpigmenten, hergestellt werden, dann genügt ein einfaches Verrühren bzw. Vermischen der Pigmente mit dem Pastenbindemittel und gegebenenfalls den weiteren Bestandteilen der Pigmentpaste.

Die optimale Mahlgutzusammensetzung ergibt sich aus der geeigneten Kombination der Hauptbestandteile der Pigmentpaste (Pigment, Pastenharz, Wasser, gegebenenfalls organische Lösemittel und Additive) und wird in dem Fachmann bekannter Weise auf das jeweilige Mahlaggregat und das jeweilige Pigment abgestimmt. Es ergeben sich beispielsweise in Abhängigkeit vom eingesetzten Pigment Festkörperanteile von 25 bis 85 Gew . - % in der Pigmentpaste.

Die erfindungsgemäße Pigmentpaste kann bevorzugt beispielsweise 5 bis 90 Gew.-Teile Pigment und 10 bis 95 Gew.-Teile der wäßrigen Polyurethanharnstoffzusammensetzung enthalten. Zusätzlich können bevorzugt beispielsweise 0 bis 40 Gew.-Teile Wasser, 0 bis 10 Gew.-Teile organische Lösemittel, 0 bis 5 Gew.-Teile Neutralisationsmittel und 0 bis 5 Gew.-Teile Hilfsmittel zugesetzt werden. Die vorstehend genannten Gewichtsteile sollen sich dabei auf 100 Gewichtsteile addieren.

Die Erfindung betrifft auch wäßrige Beschichtungsmittel, welche die erfindungsgemäßen Pigmentpasten enthalten. Zur Herstellung der wäßrigen Beschichtungsmittel werden die Pigmentpasten mit weiterem Bindemittel, dem eigentlichen Hauptbindemittel, komplettiert bzw. aufgelackt. Als Auflackbindemittel geeignet sind alle mit dem Pastenharz verträglichen wasserverdünnbaren Bindemittel, die üblicherweise zur Herstellung von Wasserbasislacken und Wasserdecklacken für die Fahrzeug- und Industrielackierung eingesetzt werden. Beispiele für einsetzbare wasserverdünnbare Harze sind Polyurethanharze, Polyesterurethanharze, fettsäuremodifizierte Polyesterurethanharze, acrylierte Polyurethan- und/oder acrylierte Polyesterharze sowie Poly(meth)acrylatharze. Die Auflackbindemittel können einzeln oder in Kombination eingesetzt werden. Bevorzugt werden Polyurethanharze und modifizierte Polyurethanharze eingesetzt. Besonders bevorzugt werden. Mischungen verschiedener Polyurethanharze eingesetzt. Es ist jedoch auch möglich, die Polyurethanharze in Kombination mit anderen wasserverdünnbaren Harzen, z. B. mit wasserverdünnbaren Polyacrylat- und/oder Polyesterharzen, einzusetzen. Geeignete Polyurethanharze und geeignete Mischungen von Polyurethanharzen sind z.B. beschrieben in DE-A-43 39 085, DE-A-39 36 794, DE-A-43 44 063, DE-A-41 15 042, DE-A-41 15 015, DE-A-43 23 896, DE-A-41 22 265, DE-A-42 28 510, DE-A-196 43 802, EP-A-089 497, EP-A-297 576.

Ebenso ist es möglich, als Auflackbindemittel die zur Herstellung der erfindungsgemäßen Pigmentpasten beschriebenen wasserverdünnbaren Polyurethanharze einzusetzen, wobei die Polyurethanharze in ihrer Zusammensetzung gleich oder verschieden sein können.

Die Auflackbindemittel können beispielsweise zu 30 bis 95 Gew.-%, bevorzugt 40 bis 80 Gew.-%, bezogen auf den Festkörpergehalt des gesamten Beschichtungsmittels, enthalten sein.

Die mit den erfindungsgemäßen Pigmentpasten hergestellten Beschichtungsmittel können gegebenenfalls auch Vernetzer enthalten. Bei den Vernetzern kann es sich beispielsweise um Formaldehyd-Kondensationsharze, wie Phenol-Formaldehyd- und Amin-Formaldehydkondensationsharze, sowie um blockierte und nicht blockierte Polyisocyanate handeln. Als Vernetzer geeignete Aminharze sind beispielsweise alkylierte Kondensate, die durch Umsetzung von Aminotriazinen und Amidotriazinen mit Aldehyden hergestellt werden. Dazu werden nach bekannten Verfahren Amine oder Aminogruppen tragende Verbindungen, wie Melamin, Guanamin, Benzoguanamin oder Harnstoff in Gegenwart von Alkoholen, wie Methanol, Ethanol, Propanol, Butanol oder Hexanol, mit Aldehyden, insbesondere Formaldehyd, kondensiert.

Als Vernetzer geeignete Polyisocyanate sind beispielsweise beliebige organische Polyisocyanate mit aliphatisch, cycloaliphatisch, araliphatisch und/oder aromatisch gebundenen freien Isocyanatgruppen. Sie sind bei Raumtemperatur flüssig oder durch Zusatz organischer Lösemittel verflüssigt. Die Polyisocyanate weisen bei 23 °C im allgemeinen eine Viskosität von 1 bis 6000 mPas, vorzugsweise über 5 und unter 3000 mPas auf. Derartige Polyisocyanate sind allgemein bekannt und z.B. beschrieben in DE-A 38 29 587 oder DE-A 42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3..

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate. Es können auch Triisocyanate wie Nonantriisocyanat eingesetzt werden. Ebenfalls sehr gut geeignet sind auch sterisch gehinderte Polyisocyanate. Beispiele hierfür sind 1,1,6,6-Tetramethyl-hexamethylendüsocyanat, 1,5-Dibutyl- pentamethyldiisocyanat, p- oder m-Tetramethylxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropran.

Als Vernetzer können auch blockierte Polyisocyanate eingesetzt werden. Es handelt sich hierbei beispielsweise um die vorstehend bereits genannten Polyisocyanate, welche mit üblichen Blockierungsmitteln blockiert sind. Als Blockierungsmittel dienen z.B. Alkylmonoalkohole, Phenole, Oxime, Amine, Phthalimid oder beta-Ketoverbindungen.

Es können jedoch auch weitere in der Lackindustrie bekannte Vernetzer eingesetzt werden, sofern in den eingesetzte Bindemitteln die entsprechenden reaktiven Gruppen zur Verfügung stehen.

Die Vernetzer können einzeln und im Gemisch eingesetzt werden.

Es handelt sich dabei um die in der Lackindustrie üblichen Vernetzer, die in der Literatur umfassend beschrieben und als Handelsprodukte erhältlich sind. Die Vernetzer können beispielsweise zu 0 bis 35 Gew.-%, bevorzugt 5 bis 25 Gew.-%, bezogen auf den Festkörpergehalt des gesamten Beschichtungsmittels, enthalten sein.

Sollen in den Beschichtungsmitteln Vernetzer eingesetzt werden, so richtet sich die Auswahl der Vernetzer nach den vernetzbaren funktionellen Gruppen des oder der Auflackbindemittel und/oder des Pastenbindemittels. Besonders vorteilhafte Bindemittelsysteme sind solche, die mit Hydroxylgruppen reaktive Vernetzer enthalten, da dann das Pastenbindemittel mit seinen Hydroxylgruppen in die Vemetzungsreaktion mit einbezogen werden kann. Dabei ist es nicht zwingend notwendig, daß auch das Auflackbindemittel vernetzbare funktionelle Gruppen enthält. Bei den Auflackbindemitteln kann es sich z.B. auch um physikalisch trocknende Bindemittel handeln, so daß eine Vernetzungsreaktion nur zwischen Pastenharz und Vernetzer stattfindet.

Die mit den erfindungsgemäßen Pigmentpasten hergestellten wäßrigen Beschichtungsmittel können desweiteren Wasser, geringe Anteile an organischen Lösemitteln und lackübliche Additive enthalten. Beispiele für lackübliche Additive sind Verlaufsmittel, rheologiebeeinflussende Mittel, wie hochdisperse Kieselsäure oder polymere Harnstoffverbindungen, Verdicker, wie anvemetzte Polycarbonsäure oder Polyurethane, Entschäumer, Netzmittel, Antikratermittel und Härtungsbeschleuniger. Die Additive werden in üblichen, dem Fachmann bekannten Mengen eingesetzt. Weiterhin können die wäßrigen Beschichtungsmittel vernetzte Polymermikroteilchen enthalten.

Den wäßrigen Beschichtungsmitteln können Effektpigmente, wie z.B. die vorstehend genannten Aluminium- und/oder Interferenzpigmente, auch in üblicher Art und Weise, z.B. in Form einer Lösemittelanteigung, und nicht in Form einer Pastenharz enthaltenden Pigmentpaste zugegeben werden.
In den Beschichtungsmitteln können Anteile organischer Lösemittel vorhanden sein, bevorzugt nicht mehr als 20 Gew.-%, besonders bevorzugt nicht mehr als 15 Gew.-%. Die organischen Lösemittel sind bevorzugt wassermischbar. Es handelt sich um übliche lacktechnische Lösemittel. Diese können aus der Herstellung der Bindemittel stammen oder werden separat zugegeben. Beispiele für solche Lösemittel sind die vorstehend bereits genannten, zur Herstellung der erfindungsgemäßen Pigmentpasten einsetzbaren Lösemittel.

Zur Herstellung der Beschichtungsmittel werden die Pigmentpaste, das oder die Auflackbindemittel und die weiteren Bestandteile in üblicher dem Fachmann bekannter Art und Weise gut miteinander vermischt und in üblicher Weise homogenisiert. Aufgrund der guten Benetzungseigenschaften des Pastenbindemittels geschieht das Auflacken unter Erhalt des Dispergierzustandes, d.h. es wird eine Flockulation der Pigmente verhindert.

Sollen farbige Metalliceffektlacke hergestellt werden ist es günstig, eine Pigmentpaste mit den farbgebenden Pigmenten und separat eine Pigmentpaste mit den Metallpigmenten herzustellen und beide Pigmentpasten dann bei der Formulierung des Beschichtungsmittels zu vereinen.

Die die erfindungsgemäßen Pigmentpasten enthaltenden Beschichtungsmittel können auf Basis physikalisch trocknender oder chemisch vernetzender Bindemittel formuliert sein. Handelt es sich beispielsweise um zweikomponentige Beschichtungsmittel, müssen die miteinander reaktiven Bindemittelkomponenten getrennt gelagert werden und können erst kurz vor der Applikation miteinander vermischt werden.

Generell kann vor der Applikation bei Bedarf mit Wasser oder organischen Lösemitteln noch auf Spritzviskosität eingestellt werden.

Die Härtungsbedingungen richten sich nach der Wahl der Bindemittel und der möglichen Vernetzer. Die Beschichtungsmittel erfordern bei entsprechender Wahl der Vernetzer, z.B. bei Polyisocyanatvernetzern, kein Einbrennen und können bei Raumtemperatur oder forciert bei höheren Temperaturen, z.B. bis 80°C, bevorzugt bis 60°C, gehärtet werden. Sie können jedoch auch, beispielsweise mit Melaminharzen und/oder blockierten Polyisocyanaten, bei höheren Temperaturen von beispielsweise 80 bis 150°C gehärtet werden.

Die die erfindungsgemäßen Pigmentpasten enthaltenden wäßrigen Beschichtungsmittel sind besonders geeignet zur Herstellung von farb- und/oder effektgebenden Basisschichten und pigmentierten Decklackschichten in einer Mehrschichtlackierung.

Bevorzugtes Anwendungsgebiet ist die Fahrzeug- und Fahrzeugteilelackierung. Die Pigmentpasten und die sie enthaltenden Beschichtungsmittel sind, je nach Härtungsbedingungen, sowohl für die Fahrzeugreparaturlackierung (Härtungstemperaturen von beispielsweise 20 bis 80°C) als auch die Fahrzeugserienlackierung (Härtungstemperaturen von beispielsweise 100 bis 140°C) anwendbar.

Andere industrielle Anwendungen sind jedoch auch möglich.

Die Erfindung betrifft daher auch die Verwendung von die erfindungsgemäße Pigmentpaste enthaltenden Beschichtungsmitteln in einem Verfahren zur Herstellung einer Mehrschichtlackierung, wobei auf ein gegebenenfalls vorbeschichtetes Substrat, z.B. auf ein mit Grundierung und Füller vorbeschichtetes Substrat, eine farb- und/oder effektgebende Basislackschicht aus einem die erfindungsgemäße Pigmentpaste enthaltenden Beschichtungsmittel aufgetragen wird und auf diese Basislackschicht entweder nach Trocknung bzw. Härtung oder naß-in-naß, gegebenenfalls nach kurzem Ablüften, eine Klarlackschicht aufgetragen wird. Als Klarlacke sind grundsätzlich alle bekannten nicht oder transparent pigmentierten Beschichtungsmittel, wie sie beispielsweise bei der Kraftfahrzeuglackierung üblich sind, geeignet. Es kann sich dabei um ein- oder zweikomponentige Klarlacke auf Lösemittel- oder Wasserbasis oder um Pulverklarlacke handeln.

Die Erfindung betrifft des Weiteren auch die Verwendung von die erfindungsgemäße Pigmentpaste enthaltenden Beschichtungsmitteln in einem Verfahren zur Herstellung einer Mehrschichtlackierung, wobei auf ein gegebenenfalls vorbeschichtetes Substrat, z.B. auf ein mit Grundierung und Füller vorbeschichtetes Substrat, eine pigmentierte Decklackschicht aus einem die erfindungsgemäße Pigmentpaste enthaltenden Beschichtungsmittel aufgetragen wird und diese Decklackschicht, gegebenenfalls nach kurzem Ablüften, gehärtet wird.

Die Applikation der Beschichtungsmittel erfolgt nach üblichen Methoden, bevorzugt mittels Spritzapplikation.

Als Substrate sind Metall- und Kunststoffsubstrate, insbesondere die in der Automobilindustrie bekannten Substrate, geeignet, wie z.B. Eisen, Zink, Aluminium, Magnesium, Edelstahl oder deren Legierungen, sowie Polyurethane, Polycarbonate oder Polyolefine.

Die erfindungsgemäßen Pigmentpasten sowie die aus ihnen erstellten Wasserlacke sind lagerstabil und zeigen auch nach längerer Lagerung kein Absetzen der Pigmente. Ebenso sind die Pigmentpasten und sie enthaltenden Wasserlacke froststabil. Es werden hochglänzende Überzüge mit hoher Chemikalienbeständigkeit und sehr guter Härte erhalten. Werden Pigmentpasten mit Metallpigmenten, insbesondere Alumiumpigmenten hergestellt und in entsprechende Beschichtungsmittel eingearbeitet, dann weisen diese Beschichtungsmittel einen erheblich geringeren Lösemittelanteil auf als auf üblichem Weg mit einer Lösemittelanteigung der Aluminiumpigmente hergestellte Metalleffektlacke. Die Beschichtungen zeigen einen sehr guten Metallic-Effekt. Im Gegensatz zu hochmolekularen Dispersionen oder Emulsionen sind die in den erfindungsgemäßen Pigmentpasten eingesetzten Polyurethanharnstoffpastenharze scherstabil, so daß sie zum Anreiben der Pigmente besonders gut geeignet sind. Aufgrund ihrer sehr guten Benetzungsfähigkeit können besonders hochkonzentrierte Pasten hergestellt werden.

Die erfindungsgemäßen Pigmentpasten, insbesondere weiß pigmentierte Pasten, ergeben Beschichtungsmittel mit guter Deckfähigkeit. Mit den erfindungsgemäßen Pigmentpasten kann als Farbton auch ein Tiefschwarz formuliert werden.

Die erfindungsgemäßen Pigmentpasten zeigen stets gleiche reproduzierbare coloristische- und Bindemitteleigenschaften und sind daher gut geeignet zur . Herstellung von standardisierten Mischlacken, die beispielsweise zur Herstellung von Reparaturlacken eingesetzt werden.

Die Erfindung soll an den folgenden Beispielen näher erläutert werden.

### 1. Beispiel

### Herstellung einer Polyurethanharnstoffdispersion

In einem 21-Kolben mit Rührer und Thermometer werden jeweils Position 1-3 eingewogen, unter Schutzgas auf 80°C geheizt und solange gehalten, bis die Dimethylolpropionsäure vollständig gelöst ist. Es wird auf 50°C gekühlt, Position 4 zugegeben und wieder auf 80°C geheizt. Der Ansatz wird solange bei 80°C gehalten, bis die Isocyanatzahl (bezogen auf Lösung) 4,2 bis 4,5 % beträgt. Dann wird auf ca. 40°C gekühlt und Position 5 und 6 werden gemeinsam zugegeben (exotherme Reaktion). Nach einer Stunde bei 80°C ist die Isocyanatzahl kleiner als 0,1 %. Dann wird Position 7 bei 80°C zugegeben. Nach 15 Minuten wird mit Position 8 verdünnt, auf einen Festkörpergehalt von ca. 35 % eingestellt und eine Stunde bei 50°C homogen gerührt.

Im folgenden sind die Positionen 1 bis 8 für 4 Polyurethandispersionen angegeben. Gew.-T sind Gewichtsteile.
- VE-Wasser:: durch Destillation oder mit Hilfe von Ionenaustauschern hergestelltes vollentsalztes oder entionisiertes Wasser

### Polyurethandispersion 1:

| | | |
|---|---|---|
| 1. | 18,00 Gew.-T. | handelsüblicher aliphatischer linearer Polyester auf Basis von Adipinsäure, Isophthalsäure und Neopentylglykol mit OHZ 112 |
| 2. | 2,35 Gew.-T. | Dimethylolpropionsäure |
| 3. | 6,48 Gew.-T. | N-Methylpyrrolidon |
| 4. | 12,25 Gew.-T. | Isophorondiisocyanat |
| 5. | 2,40 Gew.-T. | Monoethanolamin |
| 6. | 2,40 Gew.-T. | Butoxyethanol |
| 7. | 2,25 Gew.-T. | einer 1:1-Mischung aus Dimethylethanolamin und VE-Wasser |
| 8. | 53,87 Gew.-T. | VE-Wasser |

### Endwerte:

Festkörper (30 min, 150°C): 35 % in N-Methylpyrrolidon/Butoxyethanol/VE-Wasser Säurezahl : 29
MEQ (Amin) : 36,0 (Milliäquivalente Amin bezogen auf 100 g Festharz) Neutralisationsgrad: ca. 70 % OH-Zahl : 63
Viskosität (gemessen bei 25°C mit einem Rotationsmeßgerät bei einem
Geschwindigkeitsgefälle von 231 s⁻¹): 1,53 Pas
Harnstoffgruppengehalt: 114 mmol in 100 g Festharz
Urethangruppengehalt : 201 mmol in 100 g Festharz

### Polyurethandispersion 2:

- 1. 17,16 Gew.-T.: handelsüblicher aliphatischer linearer Polyester auf Basis von Adipinsäure, Isophthalsäure und Neopentylglykol mit OHZ 112
- 2. 2,24 Gew.-T.: Dimethylolpropionsäure
- 3. 6,18 Gew.-T.: N-Methylpyrrolidon
- 4. 11,68 Gew.-T.: Isophorondiisocyanat
- 5. 3,93 Gew.-T.: Diethanolamin
- 6. 3,93 Gew.-T.: Butoxyethanol
- 7. 1,80 Gew.-T.: einer 1:1-Mischung aus Dimethylethanolamin und VE-Wasser
- 8. 53,08 Gew.-T.: VE-Wasser

### Endwerte:

Festkörper (30 min, 150°C): 36,2 % in N-Methylpyrrolidon/Butoxyethanol/VE-Wasser
Säurezahl : 27, 5
MEQ (Amin) : 27,6
Neutralisationsgrad: ca. 56 %
OH-Zahl : 120
Viskosität (gemessen bei 25°C mit einem Rotationsmeßgerät bei einem
Geschwindigkeitsgefälle von 231s⁻¹): 2,07 Pas
Hamstoffgruppengehalt: 103 mmol in 100 g Festharz
Urethangruppengehalt : 187 mmol in 100 g Festharz

### Polyurethandispersion 3:

l. 17,94 Gew.-T. handelsübliches Polycarbonatdiol mit OHZ 115 mg KOH/g
2. 2,34 Gew.-T. Dimethylolpropionsäure
3. 6,50 Gew.-T. N-Methylpyrrolidon
4. 12,32 Gew.-T. Isophorondiisocyanat
5. 2,39 Gew.-T. Monoethanolamin
6. 2,39 Gew.-T. Butoxyethanol
7. 2,20 Gew.-T. einer 1:1-Mischung aus Dimethylethanolamin und VE-Wasser
8. 53,92 Gew.-T. VE-Wasser

### Endwerte:

Festkörper (30 min, 150°C): 35,0 % in N-Methylpyrrolidon/Butoxyethanol/VE-Wasser
Säurezahl : 28,0
MEQ (Amin) : 35,0
Neutralisationsgrad: ca. 70 %
OH-Zahl : 63
Viskosität (gemessen bei 25°C mit einem Rotationsmeßgerät bei einem
Geschwindigkeitsgefälle von 231 s⁻¹): 1,81 Pas
Hamstoffgruppengehalt: 114 mmol in 100 g Festharz
Urethangruppengehalt : 203 mmol in 100 g Festharz

### Polyurethandispersion 4:

1. 16,16 Gew.-T. handelsübliches Polytetrahydrofuran mit OHZ 115 mg KOH/g
2. 2,11 Gew.-T. Dimethylolpropionsäure
3. 5,85 Gew.-T. N-Methylpyrrolidon
4. 11,10 Gew.-T. Isophorondiisocyanat
5. 3,70 Gew.-T. Diethanolamin
6. 3,70 Gew.-T. Butoxyethanol
7. 2,02 Gew.-T. einer 1:1-Mischung aus Dimethylethanolamin und VE-Wasser
8. 55,36 Gew.-T. VE-Wasser

### Endwerte:

Festkörper (30 min, 150°C): 35,1 % in N-Methylpyrrolidon/Butoxyethanol/VE-Wasser
Säurezahl : 25,9
MEQ (Amin) : 34,4
Neutralisationsgrad: 74,5 %
OH-Zahl : 120
Viskosität (gemessen bei 25°C mit einem Rotationsmeßgerät bei einem
Geschwindigkeitsgefälle von 231 s⁻¹): 1,17 Pas
Harnstoffgruppengehalt: 100 mmol in 100 g Festharz
Urethangruppengehalt : 184 mmol in 100 g Festharz

### 2. Beispiel

### Herstellung von Pigmentpasten

### 2.1. Herstellung einer Schwarzpaste

Folgenden Bestandteile werden miteinander vermischt und in einer Perlmühle dispergiert:
- 43,0 Gew.-% der Polyurethandispersion 1
- 16,0 Gew.-% Farbruß
- 29,5 Gew.-% VE-Wasser
- 7,0 Gew.-% einer 10 %igen Dimethylethanolamin-Lösung
- 4,0 Gew.-% eines handelsüblichen ionischen Netzmittels
- 0,5 Gew.-% Siliconentschäumer

### 2.2. Herstellung einer Weißpaste

Folgenden Bestandteile werden miteinander vermischt und in einem Dissolver dispergiert:
- 26,0 Gew.-% der Polyurethandispersion 2
- 68,0 Gew.-% Titandioxid
- 2,0 Gew.-% VE-Wasser
- 2,0 Gew.-% Butoxyethanol
- 1,0 Gew.-% einer 10 %igen Dimethylethanolamin-Lösung
- 1,0 Gew.-% eines handelsüblichen ionischen Netzmittels

### 2.3. Herstellung einer Broncepaste

Folgende Bestandteile werden unter Rühren gut miteinander vermischt:
- 49,0 Gew.-% der Polyurethandispersion 3
- 46,0 Gew.-% einer handelsüblichen 65 %igen Broncepaste
- 5,0 Gew.-% n-Butanol

### 2.4. Herstellung einer Iriodinpaste

60,0 Gew.-% der Polyurethandispersion 4 und 40,0 Gew.-% eines handelsüblichen Iriodinpigmentes werden unter Rühren gut miteinander vermischt.

Die so hergestellten Pigmentpasten sind jeweils gut verarbeitbar. Sie sind lagerstabil und zeigen auch nach einer Lagerzeit von 12 Monaten kein Absetzen der Pigmente. Die Pigmentpasten sind froststabil. Zur Prüfung auf Froststabilität wurden die Pasten bei -5°C und -10°C eingefroren und 72 Stunden bei dieser Temperatur gehalten. Danach wurde das Material innerhalb von 24 Stunden bei Raumtemperatur aufgetaut. Ein Vergleich direkt nach dem Auftauen, nach 7 und 28 Tagen jeweils mit einer unbehandelten Pigmentpaste zeigte, daß die behandelten Pigmentpasten nur eine geringfügig erhöhte Viskosität gegenüber einer unbehandelten Pigmentpaste aufwiesen.

### 3. Beispiel

### Herstellung von Wasserbasislacken

### 3.1. Herstellung eines schwarzen Wasserbasislackes

Folgende Bestandteile wurden unter Rühren gut miteinander vermischt:
- 15,07 Gew.-% einer Polyurethandispersion entsprechend DE-A-196 43 802, Herstellungsbeispiel 1, Polyurethandispersion A)
- 17,84 Gew.-% einer Polyurethandispersion entsprechend DE-A-196 43 802, Herstellungsbeispiel 2, Polyurethandispersion B)
- 22,80 Gew.-% Schwarzpaste entsprechend Beispiel 2.1.
- 29,30 Gew.-% VE-Wasser
- 5,45 Gew.-% Butoxyethanol
- 2,20 Gew.-% Shellsol ®T
- 5,71 Gew.-% handelsüblicher Acrylatverdicker (10 %ige wäßrige Lösung)
- 1,63 Gew.-% 10 %ige Dimethylethanolamin-Lösung

### 3.2. Herstellung eines weißen Wasserbasislackes

Folgende Bestandteile wurden unter Rühren gut miteinander vermischt:
- 15,05 Gew.-% einer Polyurethandispersion entsprechend DE-A-196 43 802, Herstellungsbeispiel 1, Polyurethandispersion A)
- 17,81 Gew.-% einer Polyurethandispersion entsprechend DE-A-196 43 802, Herstellungsbeispiel 2, Polyurethandispersion B)
- 29,40 Gew.-% Weißpaste entsprechend Beispiel 2.2.
- 24,95 Gew.-% VE-Wasser
- 5,45 Gew.-% Butoxyethanol
- 5,71 Gew.-% handelsüblicher Acrylatverdicker (10 %ige wäßrige Lösung)
- 1, 63 Gew.-% 10 % ige Dimethylethanolamin-Lösung

### 3.3. Herstellung eines Metallic-Wasserbasislackes

Folgende Bestandteile wurden unter Rühren gut miteinander vermischt:
- 19,56 Gew.-% einer Polyurethandispersion entsprechend DE-A-196 43 802, Herstellungsbeispiel 1, Polyurethandispersion A)
- 23,15 Gew.-% einer Polyurethandispersion entsprechend DE-A-196 43 802, Herstellungsbeispiel 2, Polyurethandispersion B)
- 10,00 Gew.-% Broncepaste entsprechend Beispiel 2.3.
- 32,92 Gew.-% VE-Wasser
- 3,83 Gew.-% Butoxyethanol
- 1,00 Gew.-% n-Butanol
- 7,42 Gew.-% handelsüblicher Acrylatverdicker (10 % ige wäßrige Lösung)
- 2,12 Gew.-% 10 %ige Dimethylethanolamin-Lösung

### 3.4. Herstellung eines Iriodin-Wasserbasislackes

Folgende Bestandteile wurden unter Rühren gut miteinander vermischt:
- 15,96 Gew.-% einer Polyurethandispersion entsprechend DE-A-196 43 802, Herstellungsbeispiel 1, Polyurethandispersion A)
- 18,89 Gew.-% einer Polyurethandispersion entsprechend DE-A-196 43 802, Herstellungsbeispiel 2, Polyurethandispersion B)
- 25,00 Gew.-% Iriodinpaste entsprechend Beispiel 2.4.
- 28,24 Gew.-% VE-Wasser
- 3,13 Gew.-% Butoxyethanol
- 1,00 Gew.-% n-Butanol
- 6,05 Gew.-% handelsüblicher Acrylatverdicker (10 %ige wäßrige Lösung)
- 1,73 Gew.-% 10 %ige Dimethylethanolamin-Lösung

Die so erhaltenen Wasserbasislacke sind über einen Zeitraum von mindestens 36 Monaten lagerstabil.

Kurz vor der Applikation wurde jeweils ein handelsüblicher Polyisocyanatvernetzer auf Basis HDI-Trimer in einer solchen Menge zugesetzt, daß das Äquivalentverhältnis von Hydroxyl- zu Isocyanatgruppen 1 : 1 betrug.

Die Wasserbasislacke wurden auf mit üblichen Grundierungs- und Füllerschichten vorbeschichtete Metallsubstrate appliziert, nach kurzem Ablüften mit lösemittelbasierenden 2K-Klarlacken (Basis Polyhydroxyacrylatharz/Polyisocyanat) überlackiert und 30 Minuten bei 60°C gehärtet. Die erhaltenen Beschichtungen zeigen sehr gute Härte und Chemikalienbeständigkeit, gute Deckfähigkeit und die Metallic-Lackierungen einen sehr guten Metallic-Effekt, hohe Aufsichthelligkeit und gute Haftung zum Untergrund.

## Patentansprüche

1. Pigmentpaste, enthaltend ein oder mehrere Pastenharze und ein oder mehrere Pigmente in einem Pigment-Bindemittel-Gewichtsverhältnis von 0,3 : 1 bis 20 : 1 sowie gegebenenfalls Wasser, organische Lösemittel und/oder lackübliche Additive, **dadurch gekennzeichnet,**
**dass** als Pastenharz ein oder mehrere wasserverdünnbare hydroxyfunktionelle Polyurethanharnstoffharze mit einem Harnstoffgruppengehalt (berechnet als -NHCONH-) von 10 bis 300 mmol in 100 g Festharz, einem Urethangruppengehalt (berechnet als -NHCOO-) von 20 bis 300 mmol in 100 g Festharz, einer OH-Zahl von 20 bis 250 und einer zahlenmittleren Molmasse Mn von 1000 bis 20000 g/mol enthalten sind, welche erhältlich sind durch
I) Herstellung eines NCO-Gruppen enthaltenden Polyurethanprepolymeren durch Umsetzung
a1) einer oder mehrerer hydroxyfunktioneller Verbindungen mit einer zahlenmittleren Molmasse Mn von 360 bis 8000 g/mol, ausgewählt aus der Gruppe, die besteht aus: Polyesterpolyolen, deren Säure-Komponente. Dicarbonsäuren oder deren Anhydride mit unter 14 Kohlenstoffatomen im Molekül sind, Polycarbonatpolyolen, Polyetherpolyolen, Polylactonpolyolen und Poly(meth)acrylatpolyolen,
a2) einem oder mehreren Polyisocyanaten und
a3) mindestens einer Verbindung mit mindestens einer mit Isocyanat reaktiven Gruppe und mindestens einer ionischen oder zur Ionenbildung befähigten Gruppe,
II) nachfolgende Umsetzung des NCO-Gruppen enthaltenden Polyurethanprepolymeren mit
a4) einem oder mehreren hydroxyfunktionellen Monoaminen mit einer primären oder sekundären Aminogruppe, sowie gegebenenfalls mit einem oder mehreren Polyolen, in solchen Mengenverhältnissen, dass das resultierende Polyurethan die gewünschten Hydroxylzahlen sowie Harnstoff- und Urethangruppenanteile aufweist,
III) zumindest teilweise Neutralisation der ionischen Gruppen bzw. der in ionische Gruppen überführbaren Gruppen des erhaltenen Polyurethans vor oder nach der Umsetzung in Stufe 11 und Überführung des erhaltenen Umsetzungsproduktes in die wässrige Phase.

2. Pigmentpaste nach Anspruch 1, **dadurch gekennzeichnet, dass** als Pastenharz ein oder mehrere wasserverdünnbare hydroxyfunktionelle Polyurethanharnstoffharze mit einem Harnstoffgruppengehalt (berechnet als -NHCONH-) von 20 bis 250 mmol in 100 g Festharz, einem Urethangruppengehalt (berechnet als -NHCOO-) von 80 bis 250 mmol in 100 g Festharz, einer OH-Zahl von 40 'bis 200, einer Säurezahl von 18 bis 65 und einer zahlenmittleren Molmasse Mn von 1500 bis 15000 g/mol enthalten sind.

3. Pigmentpaste nach Anspruch 1 oder 2, **dadurch gekennzeichnet, dass** es sich bei der Komponente a1) um hydroxyfunktionelle lineare oder verzweigte Verbindungen mit einer OH-Funktionalität von 2 bis 3, einer OH-Zahl von 50 bis 250 und einer zahlenmittleren Molmasse Mn von 360 bis 8000 g/mol handelt.

4. Verfahren zur Herstellung einer Pigmentpaste nach einem der Ansprüche 1 bis 3, **dadurch gekennzeichnet, dass** man ein Pastenharz wie in einem der Ansprüche 1 bis 4 definiert herstellt und dieses mit einem oder mehreren Pigmenten in einem Pigment-Bindemittel-Gewichtsverhältnis von 0,3 : 1 bis 20 : 1 sowie gegebenenfalls Wasser, organischem, Lösemittel und/oder lacküblichen Additiven, vermischt.

5. Wässriges Beschichtungsmittel, enthaltend ein oder mehrere wasserverdünnbare Bindemittel, sowie eine Pigmentpaste gemäß einem der Ansprüche 1 bis 3, sowie gegebenenfalls Vernetzer, Lösemittel und lackübliche Additive.

6. Wässriges Beschichtungsmittel nach Anspruch 5, **dadurch gekennzeichnet, dass** es ein oder mehrere chemisch vernetzende oder physikalisch trocknende Bindemittel enthält.

7. Verwendung der Pigmentpaste nach einem der Ansprüche 1 bis 3 zur Herstellung von pigmentierten Basislack- oder Decklackschichten bei der Mehrschichtlackierung.

8. Verwendung der Pigmentpaste gemäß einem der Ansprüche 1 bis 3 bei der Lackierung von Fahrzeugen und Fahrzeugteilen.

9. Verwendung eines Polyurethanharnstoffharzes mit einem Harnstoffgruppengehalt (berechnet als -NHCONH-) von 10 bis 300 mmol in 100 g Festharz, einem Urethangruppengehalt (berechnet als - NHCOO-) von 20 bis 300 mmol in 100 g Festharz, einer OH-Zahl von 20 bis 250 und einer zahlenmittleren Molmasse Mn von 1000 bis 20000 g/mol enthalten sind, welche erhältlich sind durch
I) Herstellung eines NCO-Gruppen enthaltenden Polyurethanprepolymeren durch Umsetzung
a1) einer oder mehrerer hydroxyfunktioneller Verbindungen mit einer zahlenmittleren Molmasse Mn von 360 bis 8000 g/mol, ausgewählt aus der Gruppe, die besteht aus: Polyesterpolyolen, deren Säure-Komponente, Dicarbonsäuren oder deren Anhydride mit unter 14 Kohlenstoffatomen im Molekül sind, Polycarbonatpolyolen, Polyetherpolyolen, Polylactonpolyolen und Poly(meth)acrylatpolyolen,
a2) einem oder mehreren Polyisocyanaten und
a3) mindestens einer Verbindung mit mindestens einer mit Isocyanat reaktiven Gruppe und mindestens einer ionischen oder zur lonenbildung befähigten Gruppe,
II) nachfolgende Umsetzung des NCO-Gruppen enthaltenden Polyurethanprepolymeren mit
a4) einem oder mehreren hydroxyfunktionellen Monoaminen mit einer primären oder sekundären Aminogruppe, sowie gegebenenfalls mit einem oder mehreren Polyolen, in solchen Mengenverhältnissen, dass das resultierende Polyurethan die gewünschten Hydroxylzahlen sowie Harnstoff- und Urethangruppenanteile aufweist,
III) zumindest teilweise Neutralisation der ionischen Gruppen bzw. der in ionische Gruppen überführbaren Gruppen des erhaltenen Polyurethans vor oder nach der Umsetzung in Stufe 11 und Überführung des erhaltenen Umsetzungsproduktes in die wässrige Phase
als Pastenharz zur Herstellung einer Pigmentpaste mit einem oder mehreren Pigmenten in einem Pigment-Bindemittel-Gewichtsverhältnis von 0,3 : 1 bis 20 : 1.

## Claims

1. Pigment pastes, containing one or more paste resins and one or more pigments in a pigment to binder ratio by weight of 0.3 : 1 to 20 : 1 and optionally water, organic solvent and/or conventional lacquer additives, **characterised in that**,
as a paste resin, it contains one or more water-dilutable hydroxy-functional polyurethanurea resins with a urea group content (calculated as -NHCONH-) of 10 to 300 mmol in 100 g of solid resin, a urethane group content (calculated as -NHCOO-) of 20 to 300 mmol in 100 g of solid resin, an OH value of 20 to 250 and a number average molecular weight Mn of 1000 to 20000 g/mol, that are obtainable by
I) preparing a NCO group-containing polyurethane prepolymer by reacting
a1) one or more hydroxy-functional compounds with a number average molecular weight Mn of 360 to 8000 g/mol, chosen from the group comprising: polyesterpolyols, their acid components, dicarboxylic acids or their anhydrides with fewer than 14 carbon atoms in the molecule, polycarbonatepolyols, polyetherpolyols, polylactonepolyols and poly(meth)acrylatepolyols,
a2) one or more polyisocyanates and
a3) at least one compound with at least one group that can react with isocyanate and at least one group that is ionic or capable of forming ions,
II) subsequent reaction of the NCO group-containing polyurethane prepolymer with
a4) one or more hydroxy-functional monoamines with a primary or secondary amine group and also optionally with one or more polyols in ratios by weight such that the resulting polyurethane has the required hydroxyl values and proportions of urea and urethane groups,
III) at least partial neutralisation of the ionic groups or groups that can be converted into ionic groups in the polyurethane obtained, before or after reaction in stage II, and transfer of the reaction product obtained to the aqueous phase.

2. A pigment paste according to Claim 1, **characterised in that**, as a paste resin it contains one or more water-dilutable hydroxy-functional polyurethanurea resins with a urea group content (calculated as -NHCONH-) of 20 to 250 mmol in 100 g of solid resin, a urethane group content (calculated as -NHCOO-) of 80 to 250 mmol in 100 g of solid resin, an OH value of 40 to 200, an acid value of 18 to 65 and a number average molecular weight Mn of 1500 to 15000 g/mol.

3. A pigment paste according to Claim 1 or 2, **characterised in that** component a1) comprises hydroxy-functional linear or branched compounds with an OH functionality of 2 to 3, an OH value of 50 to 250 and
a number average molecular weight Mn of 360 to 8000 g/mol.

4. A process for preparing a pigment paste according to one of Claims 1 to 3, **characterised in that** a paste resin as defined in Claims 1 to 3 is prepared and this is mixed with one or more pigments in a pigment to binder ratio by weight of 0.3 : 1 to 20 : 1 and also optionally water, organic solvent and/or conventional lacquer additives.

5. An aqueous surface coating agent, containing one or more water-dilutable binders and a pigment paste in accordance with one of Claims 1 to 3, and also optionally cross-linking agents, solvents and conventional lacquer additives.

6. An aqueous surface coating agent according to Claim 5, **characterised in that** it contains one or more chemically cross-linking or physically drying binders.

7. Use of the pigment paste according to one of Claims 1 to 3 for preparing pigmented base lacquers or topcoat lacquer layers for a multi-layered lacquering procedure.

8. Use of the pigment paste according to one of Claims 1 to 3 for lacquering vehicles and vehicle parts.

9. Use of a polyurethanurea resin with a urea group content (calculated as -NHCONH-) of 10 to 300 mmol in 100 g of solid resin, a urethane group content (calculated as -NHCOO-) of 20 to 300 mmol in 100 g of solid resin, an OH value of 20 to 250 and a number average molecular weight Mn of 1000 to 20000 g/mol, that is obtainable by
I) preparing a NCO group-containing polyurethane prepolymer by reacting
a1) one or more hydroxy-functional compounds with a number average molecular weight Mn of 360 to 8000 g/mol, chosen from the group comprising: polyesterpolyols, their acid components, dicarboxylic acids or their anhydrides with fewer than 14 carbon atoms in the molecule, polycarbonatepolyols, polyetherpolyols, polylactonepolyols and poly(meth)acrylatepolyols,
a2) one or more polyisocyanates and
a3) at least one compound with at least one group that can react with isocyanate and at least one group that is ionic or capable of forming ions,
II) subsequent reaction of the NCO group-containing polyurethane prepolymer with
a4) one or more hydroxy-functional monoamines with a primary or secondary amine group and also optionally with one or more polyols in ratios by weight such that the resulting polyurethane has the required hydroxyl values and proportions of urea and urethane groups,
III) at least partial neutralisation of the ionic groups or groups that can be converted into ionic groups in the polyurethane obtained, before or after reaction in stage II, and transfer of the reaction product obtained to the aqueous phase
as a paste resin to prepare a pigment paste with one or more pigments, in a pigment to binder ratio by weight of 0.3 : 1 to 20 : 1.

## Revendications

1. Pâte de pigments comprenant une ou plusieurs résines en pâtes et un ou plusieurs pigments dans un rapport en poids pigment-liant de 0,3 : 1 jusqu'à 20 : 1 et, le cas échéant, de l'eau, des solvants organiques et/ou des additifs habituellement mis en oeuvre dans les peintures, **caractérisée en ce que**
la résine en pâte comprend une ou plusieurs résines d'urée de polyuréthane hydrodiluables et hydroxyfonctionnelles avec une teneur de groupe d'urée (calculée comme -NHCONH-) de 10 à 300 mmole dans 100 g de résine solide, une teneur de groupe d'uréthane (calculée comme - NHCOO-) de 20 à 300 mmole dans 100 g de résine solide, un indice OH de 20 à 250 et une masse molaire Mn moyenne en nombre de 1000 à 20000 g/mole, ces résines pouvant être obtenues par
I) la fabrication d'un prépolymère de polyuréthane comprenant des groupes NCO, par décomposition
a1) d'une ou de plusieurs combinaisons hydroxyfonctionnelles avec une masse molaire moyenne en nombre Mn de 360 à 8000 g/mole, sélectionnées parmi le groupe comprenant : des polyols de polyester, leurs composants acides, des acides dicarboniques ou leurs anhydrides avec moins de 14 atomes de carbone dans la molécule, des polyols de polycarbonate, des polyols de polyéther, des polyols de polylactone et des polyols de poly(méth)acrilate.
a2) d'un ou de plusieurs polyisocyanates et
a3) d'une combinaison au moins avec un groupe au moins réactif à l'isocyanate et un groupe au moins ionique ou apte à la formation d'ions,
II) la décomposition suivante du prépolymère de polyuréthane comprenant des groupes NCO, avec
a4) une ou plusieurs monoamines hydroxyfonctionnelles avec un groupe amino primaire ou secondaire et, le cas échéant, avec un ou plusieurs polyols, les proportions quantitatives étant telles que le polyuréthane résultant comporte les indices d'hydroxyle souhaités ainsi que les parts de groupe d'urée et de groupe d'uréthane souhaités,
III) la neutralisation, partielle au moins, des groupes ioniques ou des groupes transformables en groupes ioniques du polyuréthane obtenu avant ou après la décomposition au niveau II, et transformation du produit de décomposition obtenu en la phase aqueuse.

2. Pâte de pigment selon la revendication 1, **caractérisée en ce que** la résine en pâte comprend une ou plusieurs résines d'urée de polyuréthane hydrodiluables et hydroxyfonctionnelles avec une teneur de groupe d'urée (calculée comme -NHCONH-) de 20 à 250 mmole dans 100 g de résine solide, une teneur de groupe d'uréthane (calculée comme - NHCOO-) de 80 à 250 mmole dans 100 g de résine solide, un indice OH de 40 à 200, un indice d'acidité de 18 à 65 et une masse molaire Mn moyenne en nombre de 1500 à 15000 g/mole.

3. Pâte de pigment selon la revendication 1 ou 2, **caractérisée en ce que** le composant a1) consiste en des combinaisons hydroxyfonctionnelles linéaires ou ramifiées avec une fonctionnalité OH de 2 à 3, un indice OH de 50 à 250 et une masse molaire moyenne en nombre Mn de 360 à 8000 g/mole.

4. Procédé de fabrication d'une pâte de pigments selon l'une quelconque des revendications 1 à 3, **caractérisé en ce que** l'on fabrique une résine en pâte telle que définie dans l'une des revendications 1 à 4 et que l'on mélange ladite résine avec un ou plusieurs pigments dans un rapport en poids pigment-liant de 0,3 : 1 jusqu'à 20 : 1 de même qu'avec de l'eau, des solvants organiques et/ou des additifs habituellement mis en oeuvre dans les peintures.

5. Agent de revêtement aqueux comprenant un ou plusieurs liants hydrodiluables ainsi qu'une pâte de pigments selon l'une quelconque des revendications 1 à 3 et, le cas échéant, des réticulants, des solvants et des additifs habituellement mis en oeuvre dans les peintures.

6. Agent de revêtement selon la revendication 5, **caractérisé en ce qu'**il comprend un ou plusieurs liants à réticulation chimique ou séchage physique.

7. Utilisation des pâtes de pigments selon l'une quelconque des revendications 1 à 3 en vue de la fabrication de couches de peinture de base ou de couches de peinture de finition pigmentées prévues pour le peinturage multicouche.

8. Utilisation des pâtes de pigments selon l'une quelconque des revendications 1 à 3 pour le peinturage de véhicules et d'éléments de véhicule.

9. Utilisation d'une résine d'urée de polyuréthane avec une teneur de groupe d'urée (calculée comme -NHCONH-) de 10 à 300 mmole dans 100 g de résine solide, une teneur de groupe d'uréthane (calculée comme -NHCOO-) de 20 à 300 mmole dans 100 g de résine solide, un indice OH de 20 à 250 et une masse molaire Mn moyenne en nombre de 1000 à 20000 g/mole, ces résines pouvant être obtenues par
I) la fabrication d'un prépolymère de polyuréthane comprenant des groupes NCO, par décomposition
a1) d'une ou de plusieurs combinaisons hydroxyfonctionnelles avec une masse molaire moyenne en nombre Mn de 360 à 8000 g/mole, sélectionnées parmi le groupe constitué par : des polyols de polyester, leurs composants acides, des acides dicarboniques ou leurs anhydrides avec moins de 14 atomes de carbone dans la molécule, des polyols de polycarbonate, des polyols de polyéther, des polyols de polylactone et des polyols de poly(méth)acrilate.
a2) d'un ou de plusieurs polyisocyanates et
a3) d'une combinaison au moins avec un groupe au moins réactif à l'isocyanate et un groupe au moins ionique ou apte à la formation d'ions,
II) la décomposition suivante du prépolymère de polyuréthane comprenant des groupes NCO, avec
a4) une ou plusieurs monoamines hydroxyfonctionnelles avec un groupe amino primaire ou secondaire et, le cas échéant, avec un ou plusieurs polyols, les proportions quantitatives étant telles que le polyuréthane résultant comporte les indices d'hydroxyle souhaités ainsi que les parts de groupe d'urée et de groupe d'uréthane souhaités,
III) la neutralisation, partielle au moins, des groupes ioniques ou des groupes transformables en groupes ioniques du polyuréthane obtenu avant ou après la décomposition au niveau II, et transformation du produit de décomposition obtenu en la phase aqueuse,
en tant que résine en pâte destinée à la fabrication d'une pâte de pigments avec un ou plusieurs pigments dans un rapport en poids pigment-liant de 0,3 : 1 jusqu'à 20 : 1.
